# FASCICULE DE BREVET EUROPEEN

(11) **EP 3 631 220 B1**
(45) Date de publication et mention de la délivrance du brevet: **25.11.2020**
(21) Numéro de dépôt: 18735652.2
(22) Date de dépôt: 25.05.2018
(51) Int. Cl.: F16C 7/06, F02B 75/04

(54) **BIELLE A LONGUEUR VARIABLE PRESENTANT UN DISPOSITIF D'INDEXATION**
LÄNGENVERSTELLBARE PLEUELSTANGE MIT INDEXIERUNGSVORRICHTUNG
VARIABLE-LENGTH CONNECTING ROD HAVING AN INDEXING DEVICE

(30) Priorité: 29.05.2017 FR 1754681
(43) Date de publication de la demande: 08.04.2020
(73) Titulaire: MCE 5 Development, 69100 Villeubanne (FR)
(72) Inventeur: BERTHEAU, René-Pierre, 69700 Montagny (FR)
(74) Mandataire: IP Trust
(86) Numéro de dépôt international: PCT/FR2018/051234
(87) Numéro de publication internationale: WO 2018/220318

(56) Documents cités:
- WO-A1-02/10568
- WO-A1-91/05697
- DE-B3-102015 001 066

## Description

### DOMAINE DE L'INVENTION

La présente invention concerne une bielle d'un moteur à combustion interne. Plus précisément, l'invention concerne une bielle à longueur variable présentant un dispositif d'indexation.

### ARRIERE PLAN TECHNOLOGIQUE DE L'INVENTION

On connaît de l'état de la technique différentes solutions permettant d'ajuster la longueur d'une bielle (c'est-à-dire la distance d'entraxe séparant la tête de la bielle à son pied). Un tel ajustement peut être commandé ou réalisé de manière autonome, par exemple pour modifier le rapport volumétrique du moteur, et le placer dans les conditions de fonctionnement les plus économes selon la charge qu'il déploie.

Dans certaines solutions connues de bielles à longueur variable, par exemple du document DE102015001066 montrant les caractéristiques du préambule de la revendication 1 annexée, la bielle est constituée d'une première et d'une seconde partie, mécaniquement distincte l'une de l'autre et respectivement associée à la tête de la bielle et au pied de la bielle. Les deux parties sont assemblées de manière à ce qu'elles puissent coulisser l'une par rapport à l'autre selon la direction définie par l'axe longitudinal de la bielle.

La bielle dispose généralement d'un mécanisme d'ajustement de sa longueur, commandé ou autonome. Ce mécanisme peut ainsi comprendre des moyens hydrauliques et/ou mécaniques (tels que des vérins ou des ressorts) qui permettent de déplacer la première partie et la seconde partie dans une position déterminée l'une par rapport à l'autre selon la direction d'axe longitudinal de la bielle, et conférer à la bielle une longueur déterminée.

Il est souvent nécessaire de bloquer le mouvement de rotation d'axe longitudinal d'une partie par rapport à l'autre, de manière à préserver le parallélisme ou un décalage angulaire précis entre l'axe de la tête de bielle et l'axe du pied de bielle. A cet effet, la bielle peut être munie d'un dispositif d'indexation, c'est à dire d'un mécanisme imposant une orientation relative entre les deux parties qui la composent.

Par ailleurs, il peut être également nécessaire de connaitre la longueur effective de la bielle, par exemple au niveau d'un calculateur, pour piloter efficacement le moteur. C'est notamment le cas lorsque l'ajustement de la longueur de la bielle n'est pas commandé. Cette information peut permettre, par exemple, de déterminer l'instant précis, ou le calage angulaire précis, auquel la bougie de la chambre de combustion du moteur doit être allumée.

On connaît ainsi des solutions mettant en œuvre un capteur de position sans contact, le capteur étant disposé fixement sur le carter moteur et repérant la proximité d'une cible disposée fixement sur une des deux parties de la bielle (généralement celle associée au pied de la bielle) ou sur le piston de combustion. Il peut s'agir d'un capteur à effet Hall, et dans ce cas la cible comprend un élément magnétique ou une masse métallique. Le signal délivré par le capteur peut être analysé, et son maximum indique l'instant auquel la cible est positionnée au plus près du capteur. Un modèle numérique ou des tables préétablies permettent de déterminer la longueur de la bielle en combinant par exemple l'information délivrée par le capteur à la position angulaire du vilebrequin.

L'espace défini par le carter moteur dans lequel différentes pièces mobiles (vilebrequin, pistons, bielle,...) sont en mouvement est particulièrement restreint. Les éléments additionnels d'une bielle à longueur variable qui sont placés dans ce volume (dispositif d'indexation, cible, capteur...) doivent être précisément disposés et configurés pour ne pas interférer avec le fonctionnement du moteur, tout en assurant avec une grande fiabilité et une grande précision leurs fonctions. Il est également souhaitable de limiter le nombre d'éléments portés par la bielle de manière à en limiter son poids et son encombrement.

### OBJET DE L'INVENTION

La présente invention propose une solution ingénieuse à ce problème.

### BREVE DESCRIPTION DE L'INVENTION

L'objet de l'invention propose une bielle pour un moteur à combustion interne comprenant une tête de bielle, un pied de bielle et étant constituée d'une première partie et d'une seconde partie associées respectivement à la tête et au pied de la bielle. Les deux parties sont coulissantes l'une par rapport à l'autre selon l'axe longitudinal de la bielle de manière à former une bielle à longueur variable. La bielle comprend un dispositif d'indexation de la première et de la seconde partie pour leur donner une orientation relative déterminée. Selon l'invention le dispositif d'indexation comprend un premier élément solidaire de la première partie et porté par la tête de bielle.

Selon d'autres caractéristiques avantageuses et non limitatives de l'invention, prises seules ou selon toute combinaison techniquement réalisable :
- le dispositif d'indexation comprend un second élément solidaire de la seconde partie, le premier élément et le second élément coopérant pour bloquer le mouvement de rotation d'axe longitudinal d'une partie par rapport à l'autre ;
- le second élément est rendu solidaire de la seconde partie par l'intermédiaire d'un prolongateur ;
- le premier élément est une goupille de direction parallèle à l'axe longitudinal de la bielle et le second élément est une pièce présentant un alésage dont la dimension correspond à celle de la goupille ;
- la première partie comprend un chapeau assemblé par une vis de fixation le premier élément correspondant à une extrémité saillante de la vis de fixation ;
- le second élément porte une cible susceptible d'être repérée par un capteur, afin de déterminer la longueur effective de la bielle ;
- la cible comprend un aimant logé dans un corps creux, le corps creux étant fixé sur le second élément.

### BREVE DESCRIPTION DES DESSINS

D'autres caractéristiques et avantages de l'invention ressortiront de la description détaillée de l'invention qui va suivre en référence aux figures annexées sur lesquels :
- Les figures 1a et 1b représentent, respectivement en perspective isométrique et en coupe, un premier exemple d'une bielle pour moteur à combustion interne conforme à l'invention ;
- les figures 2a et 2b représentent, respectivement en perspective isométrique et en coupe, un deuxième exemple d'une bielle pour moteur à combustion interne conforme à l'invention.

### DESCRIPTION DETAILLEE DE L'INVENTION

Par souci de simplification de la description à venir, les mêmes références sont utilisées pour des éléments identiques ou assurant la même fonction dans les différents modes de réalisation de l'invention.

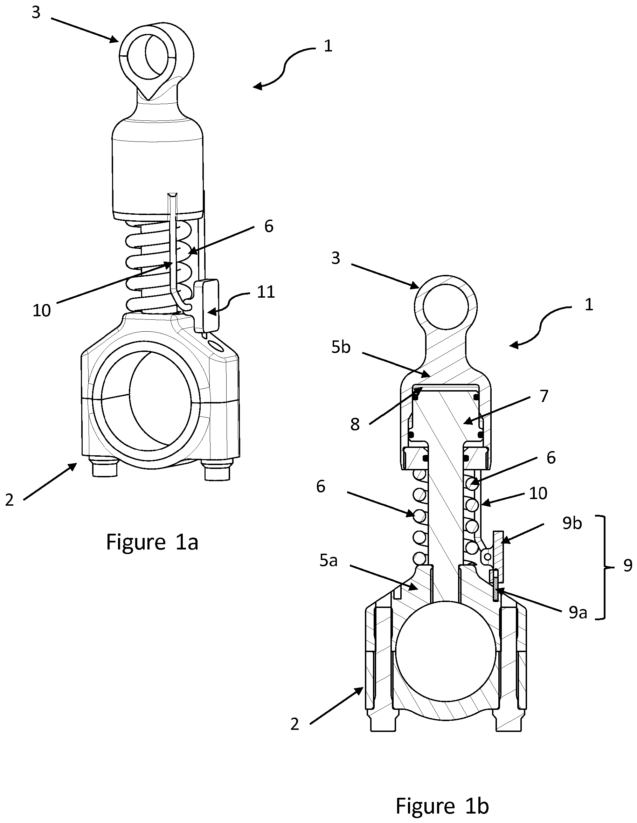

Les figures 1a et 1b représentent un exemple d'une bielle 1 pour moteur à combustion interne conforme à l'invention. Elle comprend une tête 2, un pied 3 et un corps liant la tête 2 et le pied 3. Comme cela est particulièrement visible sur la figure 1b, la bielle 1 est constituée de deux parties 5a, 5b respectivement associées à la tête 2 et au pied 3 de la bielle 1. Les deux parties 5a, 5b sont susceptibles de coulisser l'une par rapport à l'autre selon l'axe longitudinal de la bielle 1, lorsqu'elles sont assemblées pour former une bielle à longueur variable.

La bielle 1, la première partie 5a et/ou la seconde partie 5b peuvent comprendre d'autres éléments, tels que des moyens hydrauliques et/ou mécaniques formant en combinaison un mécanisme d'ajustement de la longueur de la bielle 1. Ainsi, dans l'exemple représenté sur les figures la et 1b, la bielle 1 comprend un ressort 6, un piston hydraulique 7 et un cylindre hydraulique 8. Mais l'invention n'est nullement limitée à une bielle comprenant un tel mécanisme d'ajustement de sa longueur, et on peut envisager d'autres configurations permettant de former une bielle de longueur variable tout en restant dans le cadre de la présente invention.

Outre le mouvement fonctionnel de coulissement, les deux parties 5a, 5b de la bielle 1 sont susceptibles de s'orienter l'une par rapport à l'autre par rotation d'axe longitudinal. Afin de prévenir ce mouvement et donner une orientation relative déterminée entre la première partie 5a et la seconde partie 5b, la bielle 1 est munie d'un dispositif d'indexation 9.

Selon l'invention, le dispositif d'indexation 9 comprend un élément 9a porté par la tête de bielle 2 et donc solidaire de la première partie 5a.

Le dispositif d'indexation 9 comprend également un second élément 9b solidaire de la seconde partie 5b.

Lorsque les deux parties 5a, 5b de la bielle 1 sont assemblées l'une à l'autre, le premier élément 9a et le second élément 9b coopèrent pour bloquer le mouvement de rotation d'axe longitudinal d'une partie 5a, 5b par rapport à l'autre. La liaison formée entre les deux éléments 9a, 9b bloque le mouvement de rotation, au jeu de fonctionnement prêt, et impose donc une orientation relative déterminée entre la première partie 5a et la seconde partie 5b de la bielle 1.

En faisant porter le dispositif d'indexation 9 par la tête 2 de la bielle 1, il est possible de positionner ce dispositif 9 à une distance importante de l'axe central du corps de la bielle 1, plus importante que si ce dispositif était porté par exemple par le corps de la bielle lui-même. En conséquence, les jeux de fonctionnement existant entre le premier élément 9a et le second élément 9b du dispositif d'indexation 9 entraînent un faible débattement angulaire, et donc un meilleur positionnement dynamique des deux parties 5a, 5b de la bielle 1.

Avantageusement, pour assurer ce meilleur positionnement, le premier élément 9a est positionné sur la tête de bielle à une distance de l'axe longitudinal supérieure au tiers de la distance séparant cet axe d'un flanc extérieur de la tête 2 de la bielle 1.

À titre d'exemple, et comme cela est représenté sur les figures la et 1b, le premier élément 9a peut-être une goupille fixée sur la tête 2 de la bielle 1, l'axe longitudinal de la goupille étant parallèle à l'axe longitudinal de la bielle 1. Le second élément 9b du dispositif d'indexation 9 est dans ce cas une pièce présentant un alésage dont les dimensions correspondent à celles de la goupille 9a pour permettre son coulissement, et former la liaison glissière. On pourrait bien entendu réaliser un dispositif d'indexation 9 inverse, c'est-à-dire faire porter la goupille par la seconde partie 5b de la bielle 1 et faire porter la pièce présentant l'alésage par la première partie 5a. Par ailleurs, toute autre combinaison d'éléments 9a, 9b permettant de réaliser une liaison glissière est envisageable, par exemple une pièce portant une rainure coopérant avec une autre pièce portant un tenon. L'invention n'est naturellement nullement limitée à une combinaison de pièces particulières.

Pour placer le second élément 9b en vis-à-vis du premier élément 9a, et former la liaison glissière, le second élément 9b peut être relié à la seconde partie 5b par au moins un prolongateur 10. Lors du fonctionnement du moteur, le dispositif d'indexation 9 présente également l'avantage de bloquer les modes vibratoires qui pourraient se former dans ce prolongateur 10. Il n'est donc pas nécessaire de le rendre particulièrement rigide, et on évite ainsi d'alourdir la bielle d'un poids inutile.

Ainsi, comme cela est représenté sur les figures la et 1b, le prolongateur 10 peut être formé d'une ou d'une pluralité de tige (s) effilée (s), dont on a configuré la forme pour permettre d'en fixer une extrémité à la seconde partie 5b de la bielle 1, et assurer le positionnement de l'autre extrémité, qui porte le second élément 9b, en vis-à-vis du premier élément 9a.

De manière particulièrement ingénieuse, le second élément 9b peut également porter une cible 11, susceptible d'être repérée par un capteur, afin de déterminer la longueur effective de la bielle 1. Lorsque le capteur est un capteur par effet Hall, cette cible peut comprendre un aimant ou une masse métallique, optionnellement logé dans un corps creux, par exemple en aluminium. Le corps creux est fixé sur le second élément 9b et permet de maintenir la cible. En son absence, la cible peut être directement fixée sur le second élément 9b.

On dispose alors d'un seul dispositif 9, porté par la tête 2 de la bielle, permettant à la fois d'assurer l'indexation des deux parties 5a, 5b de la bielle 1 et de porter la cible de repérage 11. On peut ainsi former une bielle particulièrement compacte, et limiter l'encombrement du moteur. On positionne par ailleurs la cible à proximité de la tête 2 de la bielle 1 qui occupe une position dans le carter moteur, sous le bas du cylindre, accessible pour y fixer le capteur.

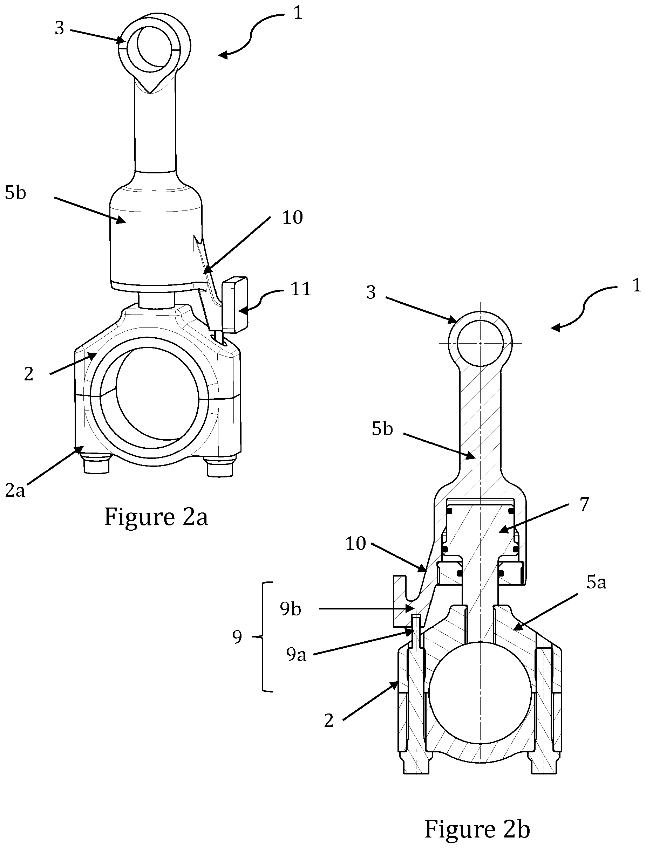

Les figures 2a et 2b représentent un deuxième exemple de réalisation d'une bielle 1 conforme à l'invention. Dans ce second exemple, les éléments hydromécaniques du dispositif d'ajustement de la longueur de la bielle sont intégrés dans le piston 7. La seconde partie 5b comprend une jupe définissant un logement dans lequel ce mécanisme est placé. L'extrémité de la jupe est proche de la tête de la bielle 1.

Dans cet exemple, la tête 2 de la bielle 1 comprend un chapeau 2a maintenu par au moins une vis de fixation du chapeau de bielle. Le corps de vis (ou goujon) présente une extrémité préférablement non filetée. Et il présente une longueur suffisante pour que, lorsqu'il est assemblé à la tête 2 pour maintenir le chapeau 2a, l'extrémité non filetée saillante forme la goupille 9a du dispositif d'indexation 9. On forme de cette manière particulièrement simplement la goupille 9a sur la première partie 5a de la bielle 1. On s'assure ainsi également de positionner cette goupille 9a à une distance suffisante de l'axe longitudinal de la bielle pour limiter le débattement angulaire des parties 5a, 5b l'une par rapport à l'autre.

On note que cette configuration n'est nullement limitée à la bielle de ce deuxième exemple. Elle peut par exemple être tout à fait appliquée à la bielle de l'exemple précédent, représentée sur les figures 1a, 1b.

Poursuivant la description de la bielle 1 représentée sur les figures 2a et 2b, le second élément 9b du dispositif d'indexation 9 est formé d'un corps présentant un alésage coopérant avec la goupille 9a. Le corps 9b est relié à la seconde partie 5b de la bielle 1, et plus précisément au bas de la jupe, par un prolongateur 10 qui prend la forme d'un bras rigide. Comme dans l'exemple précédent, le second élément 9b porte avantageusement la cible 11.

Bien entendu l'invention n'est pas limitée aux exemples décrits et on peut y apporter des variantes de réalisation sans sortir du cadre de l'invention tel que défini par les revendications.

## Revendications

1. Bielle (1) pour un moteur à combustion interne, la bielle (1) comprenant une tête de bielle (2), un pied de bielle (3) et étant constituée d'une première partie (5a) et d'une seconde partie (5b) associées respectivement à la tête (2) et au pied (3), les deux parties (5a, 5b) étant coulissantes l'une par rapport à l'autre selon l'axe longitudinal de la bielle (1) de manière à former une bielle à longueur variable, **caractérisée en ce qu'**elle comprend un dispositif d'indexation (9) de la première et de la seconde partie (5a, 5b) pour leurs donner une orientation relative déterminée, le dispositif d'indexation (9) comprenant un premier élément (9a) solidaire de la première partie (5a) et porté par la tête de bielle (2).

2. Bielle (1) selon la revendication précédente dans laquelle le dispositif d'indexation (9) comprend un second élément (9b) solidaire de la seconde partie (5b), le premier élément (9a) et le second élément (9b) coopérant pour bloquer le mouvement de rotation d'axe longitudinal d'une partie (5a, 5b) par rapport à l'autre.

3. Bielle (1) selon la revendication précédente dans laquelle le second élément (9b) est rendu solidaire de la seconde partie (5b) par l'intermédiaire d'un prolongateur (10).

4. Bielle (1) selon l'une des revendications 2 et 3 dans laquelle le premier élément (9a) est une goupille de direction parallèle à l'axe longitudinal de la bielle et le second élément (9b) est une pièce présentant un alésage dont la dimension correspond à celle de la goupille.

5. Bielle (1) selon l'une des revendications précédentes dans laquelle la première partie (5a) comprend un chapeau (2a) assemblé par une vis de fixation le premier élément (9a) correspondant à une extrémité saillante de la vis de fixation.

6. Bielle (1) selon l'une des revendications 2 à 5 dans laquelle le second élément (9b) porte une cible (11) susceptible d'être repérée par un capteur, afin de déterminer la longueur effective de la bielle (1).

7. Bielle (1) selon la revendication précédente dans laquelle la cible (11) comprend un aimant logé dans un corps creux, le corps creux étant fixé sur le second élément (9b).

## Patentansprüche

1. Pleuel (1) für einen internen Verbrennungsmotor, wobei der Pleuel (1) einen Pleuelkopf (2), einen Pleuelfuß (3) umfasst und aus einem ersten Teil (5a) und einem zweiten Teil (5b) besteht, die jeweils dem Kopf (2) und dem Fuß (3) zugeordnet sind, wobei die beiden Teile (5a, 5b) relativ zueinander entlang der Längsachse des Pleuels (1) gleiten, um einen Pleuel variabler Länge zu bilden, **dadurch gekennzeichnet, dass** es eine Indexiervorrichtung (9) des ersten und des zweiten Teils (5a, 5b) umfasst, um ihnen eine bestimmte relative Ausrichtung zu geben, wobei die Indexiervorrichtung (9) ein erstes Element (9a) umfasst, das mit dem ersten Teil (5a) fest verbunden ist und vom Pleuelkopf (2) getragen wird.

2. Pleuel (1) nach dem vorhergehenden Anspruch, bei dem die Indexiervorrichtung (9) ein zweites Element (9b) umfasst, das mit dem zweiten Teil (5b) fest verbunden ist, wobei das erste Element (9a) und das zweite Element (9b) zusammenwirken, um die Rotationsbewegung der Längsachse eines Teils (5a, 5b) relativ zum anderen zu blockieren.

3. Pleuel (1) nach dem vorhergehenden Anspruch, bei dem das zweite Element (9b) mittels einer Verlängerung (10) mit dem zweiten Teil (5b) fest verbunden ist.

4. Pleuel (1) nach einem der Ansprüche 2 und 3, wobei das erste Element (9a) ein Lenkstift parallel zur Längsachse des Pleuels ist und das zweite Element (9b) ein Stück mit einer Bohrung ist, deren Abmessung der des Stiftes entspricht.

5. Pleuel (1) nach einem der vorhergehenden Ansprüche, wobei der erste Teil (5a) eine Kappe (2a) umfasst, die mittels einer Befestigungsschraube montiert ist, wobei das erste Element (9a) einem vorspringenden Ende der Befestigungsschraube entspricht.

6. Pleuel (1) nach einem der Ansprüche 2 bis 5, wobei das zweite Element (9b) ein Ziel (11) aufweist, das von einem Sensor identifiziert werden kann, um die effektive Länge des Pleuels (1) zu bestimmen.

7. Pleuel (1) nach dem vorhergehenden Anspruch, bei dem das Ziel (11) einen Magneten umfasst, der in einem Hohlkörper untergebracht ist, wobei der Hohlkörper an dem zweiten Element (9b) befestigt ist.

## Claims

1. Connecting rod (1) for an internal combustion engine, the connecting rod (1) comprising a big end (2), a small end (3) and consisting of a first part (5a) and a second part (5b), respectively associated with the big end (2) and the small end (3), the two parts (5a, 5b) being displaceable relative to each other along the longitudinal axis of the connecting rod (1) so as to form a variable-length connecting rod, **characterized in that** it comprises an indexing device (9) of the first and the second part (5a, 5b) to give them a predetermined relative orientation, the indexing device (9) comprising a first element (9a) rigidly connected to the first part (5a) and carried by the big end (2).

2. Connecting rod (1) according to the preceding claim, wherein the indexing device (9) comprises a second element (9b) rigidly connected to the second part (5b), the first element (9a) and the second element (9b) cooperating so as to block the longitudinal axis rotational movement of one part (5a, 5b) relative to the other.

3. Connecting rod (1) according to the preceding claim, wherein the second element (9b) is rigidly connected to the second part (5b) by means of an extension (10).

4. Connecting rod (1) according to any of claims 2 and 3, wherein the first element (9a) is a steering pin parallel to the longitudinal axis of the connecting rod and the second element (9b) is a part having a bore of which the dimension corresponds to that of the pin.

5. Connecting rod (1) according to any of the preceding claims, wherein the first part (5a) comprises a cap (2a) assembled by a fixing screw, with the first element (9a) corresponding to a protruding end of the fixing screw.

6. Connecting rod (1) according to any of claims 2 to 5, wherein the second element (9b) carries a target (11) capable of being detected by a sensor, in order to determine the effective length of the connecting rod (1).

7. Connecting rod (1) according to the preceding claim, wherein the target (11) comprises a magnet housed in a hollow body, the hollow body being fixed on the second element (9b).
